# EUROPÄISCHE PATENTANMELDUNG

(11) **EP 1 118 498 A2**
(43) Veröffentlichungstag der Anmeldung: **25.07.2001**
(21) Anmeldenummer: 00250423.1
(22) Anmeldetag: 08.12.2000
(51) Int. Cl.: B60N 2/015

(54) **Vorrichtung zur verschiebbaren Befestigung von Fahrzeugkomponenten**

(30) Priorität: 19.01.2000 DE 10002909
(71) Anmelder: Volkswagen AG, 38436 Wolfsburg (DE)
(72) Erfinder: Wischeropp, Hagen, 39108 Magdeburg (DE)
(74) Vertreter: Schneider, Henry, Dipl.-Ing.

(57) **Zusammenfassung**

Die Erfindung betrifft ein Befestigungssystem zur verschiebbaren Befestigung von Fahrzeugkomponenten, insbesondere von Sitzen oder dergleichen, an einem Boden eines Fahrzeuges, insbesondere Kraftfahrzeuges, mit einem im Wesentlichen parallel zum Boden angeordneten Grundkörper, der zur verschiebbaren Aufnahme der Fahrzeugkomponente wenigstens ein Schienenprofil ausbildet, wobei der Grundkörper kraftschlüssig mit dem Boden verbunden ist.

Es ist vorgesehen, dass der Grundkörper (12) zwei im Wesentlichen parallel und beabstandet zueinander angeordnete plattenförmige Elemente (24, 26) umfasst, wobei die plattenförmigen Elemente (24, 26) über Versteifungsstrukturen (28) miteinander kraftschlüssig verbunden sind.

## Beschreibung

Die Erfindung betrifft eine Vorrichtung zur verschiebbaren Befestigung von Fahrzeugkomponenten, insbesondere von Sitzen oder dergleichen, mit den im Oberbegriff des Anspruchs 1 genannten Merkmalen.

Eine gattungsgemäße Vorrichtung ist beispielsweise aus der DE 295 00 474.6 bekannt. Dort ist vorgesehen, dass Schienenprofile zur Aufnahme der verschiebbar anzuordnenden Fahrzeugkomponenten einstückig angeformter Bestandteil wenigstens eines, den Karosserieboden eines Fahrzeuges in seiner Breite abdeckenden Plattenteiles sind. Diese Plattenteile werden an definierten Verschraubungspunkten mit der Karosserie kraftschlüssig gefügt. Durch eine derartige Ausbildung wird erreicht, dass im Wesentlichen parallel zu einem Kraftfahrzeugboden die die Schienenprofile aufweisenden Plattenteile angeordnet sind. Durch die definierten Verschraubungspunkte wird eine sichere und stabile Anbindung der Vorrichtung an den Kraftfahrzeugboden erreicht. Bei der hier bekannten Vorrichtung ist jedoch nachteilig, dass zum Erreichen einer hohen Steifigkeit relativ massiv aufgebaute Plattenteile vorzusehen sind, die zu einer relativ großen Gewichtserhöhung führen.

Der Erfindung liegt daher die Aufgabe zugrunde, eine Vorrichtung der gattungsgemäßen Art zu schaffen, bei der in einfacher und gewichtsparender Weise eine sichere Befestigung von Fahrzeugkomponenten an einem Fahrzeugboden möglich ist.

Erfindungsgemäß wird diese Aufgabe durch ein Befestigungssystem mit den im Anspruch 1 genannten Merkmalen gelöst. Dadurch, dass der Grundkörper zwei im Wesentlichen parallel und beabstandet zueinander angeordnete plattenförmige Elemente umfasst, die plattenförmigen Elemente über Versteifungsstrukturen miteinander kraftschlüssig verbunden sind und der Grundkörper wenigstens ein integriertes Schienenprofil zur verschiebbaren Aufnahme wenigstens einer Fahrzeugkomponente aufweist, ist vorteilhaft möglich, eine sehr kompakte, verwindungssteife und gewichtreduzierte Vorrichtung bereitzustellen. Durch die über die Versteifungsstruktur kraftschlüssig verbundenen plattenförmigen Elemente wird ein sandwichartiger Doppelboden geschaffen, der in der Lage ist, hohe Verschiebekräfte aufzunehmen. Dieser über dem eigentlichen Fahrzeug angeordnete Doppelboden bietet darüber hinaus den Vorteil einer verbesserten Dämpfung von über den Fahrzeugboden übertragener Schallwellen, so dass sich insgesamt eine Geräuschdämmung ergibt.

In bevorzugter Ausgestaltung der Erfindung ist vorgesehen, dass ein Abstand zwischen den plattenförmigen Elementen geringer ist als eine Führungshöhe des wenigstens einen Schienenprofils. Hierdurch wird vorteilhaft erreicht, dass zwischen dem Fahrzeugboden und dem unteren plattenförmigen Element ein Resonanz-Hohlraum geschaffen ist, der eine weitere zusätzliche Geräuschdämpfung ermöglicht. Dieser Hohlraum steht ferner für die Anordnung weiterer Funktionselemente, wie insbesondere Luftführungskanäle, Versorgungs- und Steuerleitungen oder dergleichen, zur Verfügung.

In weiterer bevorzugter Ausgestaltung der Erfindung ist vorgesehen, dass die in das Grundelement integrierten Profile im Wesentlichen bündig mit dem oberen plattenförmigen Element abschließen. Hierdurch wird vorteilhaft erreicht, dass zum Innenraum des Fahrzeuges gerichtet eine im Wesentlichen ebene Fläche entsteht, so dass konstruktionsbedingte Unebenheiten des Fahrzeugbodens so in einfacher Weise ausgeglichen werden können. Bei entsprechender Gestaltung der Sichtfläche des oberen plattenförmigen Elementes kann auf die Anordnung weiterer Ausgleichselemente, wie insbesondere Teppichboden oder dergleichen, verzichtet werden.

Das erfindungsgemäße Befestigungssystem umfasst ferner mit dem verschiebbar zu befestigenden Fahrzeugkomponenten kraftschlüssig verbindbare Führungselemente, die in den Führungsschienen formschlüssig anordbar sind. Die Führungselemente werden bevorzugt von einer schlittenartigen Konstruktion gebildet, die einerseits Verriegelungselemente zum Befestigen der Fahrzeugkomponenten in einer definierten Position und Gleitelemente zum Verschieben der Fahrzeugkomponenten entlang der Führungsschiene umfasst. Die Gleitelemente werden bevorzugt von drehbar gelagerten Rollen gebildet, so dass eine unter geringer Krafteinwirkung mögliche Verschiebbarkeit gegeben ist.

Die Verriegelungselemente umfassen in weiterer bevorzugter Ausgestaltung der Erfindung wenigstens einen Verriegelungsbolzen, der in eine korrespondierende Ausnehmung des Grundelementes einbringbar angeordnet ist. Hierdurch wird in einfacher Weise eine Verriegelung beziehungsweise Entriegelung der verschiebbar angeordneten Fahrzeugkomponenten möglich. Insbesondere, wenn der wenigstens eine Bolzen gegen die Kraft eines Federelementes von seiner Verriegelungs- in seine Entriegelungsstellung bewegbar ist, kann in einfacher Weise eine selbsttätige Verriegelung durch Verschieben der Fahrzeugkomponente entlang der wenigstens einen Führungsschiene erfolgen.

In weiterer bevorzugter Ausgestaltung der Erfindung ist vorgesehen, dass die Führungselemente Stützelemente zur Abstützung der Fahrzeugkomponenten quer zu einer Verschieberichtung der Fahrzeugkomponenten, bei Sitzen oder dergleichen also in der Regel quer zu einer Fahrtrichtung des Fahrzeuges, umfassen. Hierdurch wird einerseits die Verschiebbarkeit der Fahrzeugkomponenten sichergestellt und andererseits eine spielfreie Abstützung quer zur Verschieberichtung sichergestellt. Die Fahrzeugkomponenten sind somit bei sich in Verriegelungsstellung befindenden Verriegelungselementen sowohl in als auch quer zur Verschieberichtung fest angeordnet.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Schnittdarstellung durch das erfindungsgemäße Befestigungssystem;
- Figur 2: eine Schnittdarstellung durch ein Grundelement des Befestigungssystems in einem zweiten Ausführungsbeispiel;
- Figur 3: eine schematische Perspektivansicht des Befestigungssystems und
- Figur 4: eine schematische Perspektivansicht eines Führungselementes des Befestigungssystems.

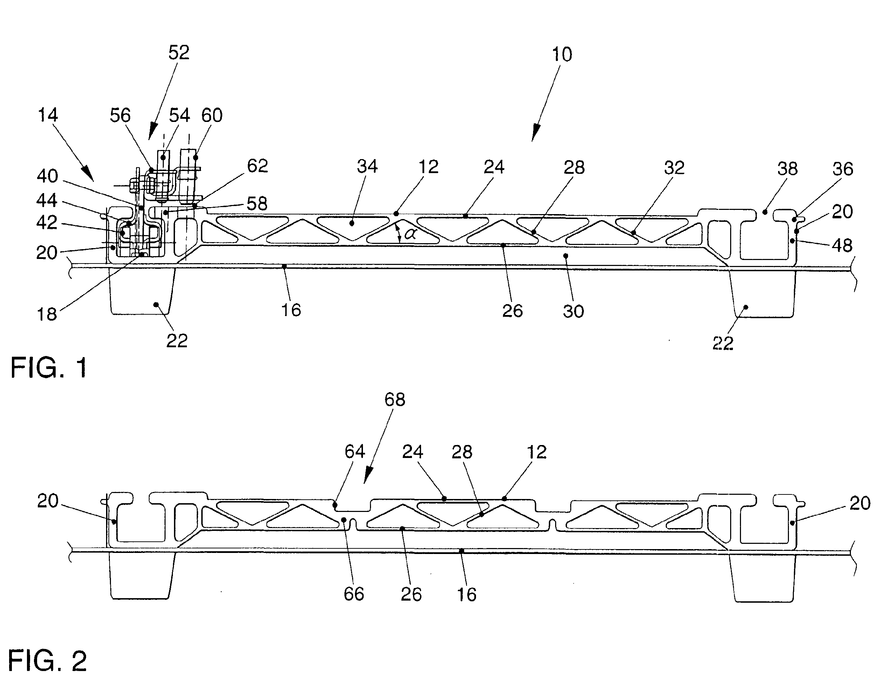

Figur 1 zeigt ein insgesamt mit 10 bezeichnetes Befestigungssystem. Das Befestigungssystem 10 umfasst ein Grundelement 12 sowie wenigstens ein Führungselement 14. Im in Figur 1 dargestellten Ausführungsbeispiel wird davon ausgegangen, dass das Befestigungssystem 10 der verschiebbaren Befestigung eines nicht dargestellten Fahrzeugsitzes in einem Kraftfahrzeug dient. In diesem Fall bildet der Fahrzeugsitz die verschiebbar zu befestigende Fahrzeugkomponente. Nach weiteren, nicht dargestellten Ausführungsbeispielen kann das Befestigungssystem 10 auch zur verschiebbaren Befestigung von Sitzbänken, Transportbehältern oder dergleichen dienen.

Der Grundkörper 12 ist mit einem Fahrzeugboden 16 kraftschlüssig verbunden. Hierzu dienen beispielsweise Befestigungselemente 18, die am Grund eines Schienenprofils 20 angeordnet sind. Die Befestigungselemente 18 sind beispielsweise Gewindeschrauben, die in entsprechende Gewindeaufnahmen des Fahrzeugbodens 16 eingreifen. Die Befestigungselemente 18 sind hierbei vorzugsweise im Bereich von Trägern, insbesondere Längsträgern 22 oder Querträgern des Fahrzeugbodens 16 angeordnet. Der Grundkörper 12 umfasst wenigstens ein integriertes Schienenprofil 20. Gemäß dem dargestellten Ausführungsbeispiel sind zwei Schienenprofile 20 vorgesehen, wobei aus Gründen der Übersichtlichkeit lediglich ein Führungselement 14 dargestellt ist. Die Führungselemente 14 sind kraftschlüssig und/oder formschlüssig mit der verschiebbar zu befestigenden Fahrzeugkomponente, beispielsweise dem Fahrer- oder Beifahrersitz, verbunden.

Der Grundkörper 12 besitzt zwei parallel und beabstandet zueinander angeordnete plattenförmige Elemente 24 und 26, die über Versteifungsstrukturen 28 miteinander verbunden sind. Das dem Fahrzeugboden 16 zugewandte plattenförmige Element 26 ist beabstandet zu diesem angeordnet, so dass es hier zur Ausbildung eines Hohlraumes 30 kommt. Innerhalb des Hohlraumes 30 können - nicht dargestellte - konstruktionsbedingte Versteifungsrippen oder dergleichen des Kraftfahrzeugbodens 16 angeordnet sein. Auch können hier Luftleitkanäle oder dergleichen entlanggeführt sein. Das obere plattenförmige Element 24 schließt im Wesentlichen bündig mit den Schienenprofilen 20 ab, so dass in Draufsicht eine im Wesentlichen ebene Fläche entsteht.

Die Versteifungsstrukturen 28 sind von Stegen 32 gebildet, die unter einem Winkel α zu den plattenförmigen Elementen 24 und 26 geneigt angeordnet verlaufen. Der Winkel α kann zwischen 10° und 90°, beispielsweise 30°, betragen. Die Stege 32 sind alternierend angeordnet, so dass es im Querschnitt gesehen zur Ausbildung von Waben 34 kommt. Durch eine derartige Gitterstruktur besitzt der Grundkörper 12 eine sehr große Steifigkeit (Biegefestigkeit), die ein sicheres Befestigen der verschiebbaren Fahrzeugkomponente am Fahrzeugboden 16 gestattet. Ferner sorgen der Hohlraum 30 und die Waben 34 für die Ausbildung von Dämpfungsvolumina, mittels denen über den Fahrzeugboden 16 übertragene Schallsignale gedämpft werden. Durch eine derartige Gitterstruktur werden auch große Steifigkeiten mit einem minimalen Materialeinsatz erreicht, so dass insgesamt nur eine unwesentliche Gewichtserhöhung eintritt. Der Grundkörper 12 mit den integrierten Schienenprofilen 20 besteht beispielsweise aus einem Aluminiumstrangpressprofil.

Die Schienenprofile 20 werden von - im Querschnitt gesehen - im Wesentlichen U-förmig ausgebildeten Aufnahmeelementen 36 gebildet, die jeweils einen Führungsschlitz 38 ausbilden. Der Führungsschlitz 38 wird von einem Halteelement 40 des Führungselementes 14 durchgriffen. Innerhalb der Aufnahme 36 trägt das Halteelement 40 Rollenpaare 42, die drehbar an dem Halteelement 40 angelenkt sind. Hierdurch wird eine Verschiebbarkeit der Führungselemente 14 in den Führungsschienen 20 in Längsrichtung - gemäß der Darstellung in die Papierebene hinein beziehungsweise hinaus - mit geringem Kraftaufwand möglich.

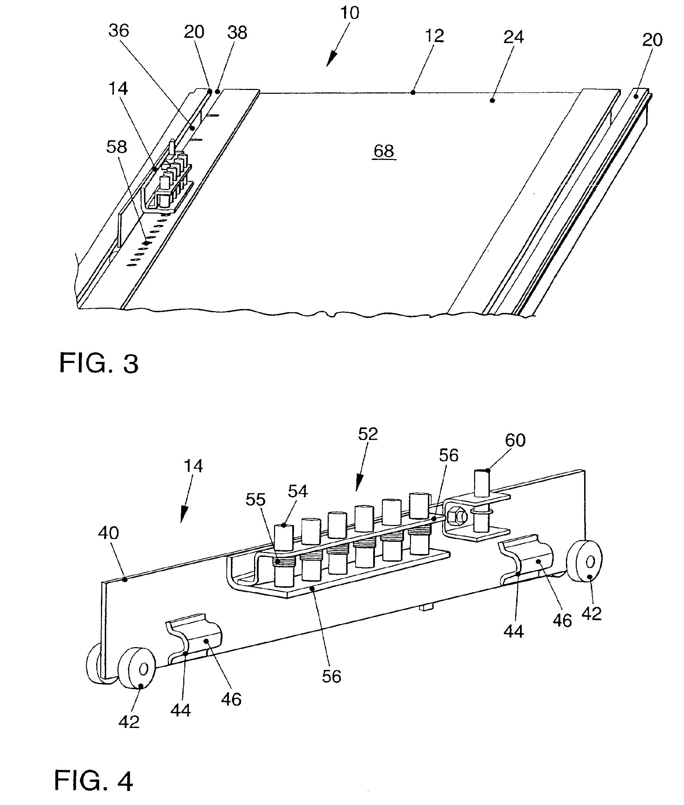

Das Halteelement 40 trägt ferner Stützelemente 44, die innerhalb der Aufnahme 36 angeordnet sind. Die Stützelemente 44 besitzen eine Führungsfläche 46 (Figur 4), die jeweils in Anlagekontakt mit den Schenkeln 48 beziehungsweise 50 der Aufnahme 36 liegen. Hierdurch wird erreicht, dass bei einer Längsverschiebung der Fahrzeugkomponenten innerhalb der Führungsschienen 20 eine quer zur Verschieberichtung wirkende Abstützung gegeben ist, so dass eine Verschiebbarkeit der Fahrzeugkomponenten spielfrei quer zur Verschieberichtung gegeben ist.

Wenigstens einem der Führungselemente 14 ist eine Verriegelungseinrichtung 52 zugeordnet, die wenigstens einen Verriegelungsbolzen 54 umfasst. Wie die schematische Perspektivansicht des Führungselementes 14 in Figur 4 zeigt, sind gemäß dem Ausführungsbeispiel insgesamt sechs Verriegelungsbolzen 54 vorgesehen. Die Verriegelungsbolzen 54 sind derart angeordnet, dass diese zwei beabstandet zueinander angeordnete Bleche 56 durchgreifen und durch die Kraft jeweils eines Federelementes 55 - gemäß der Darstellung - nach unten gedrängt werden. Der Grundkörper 12 besitzt in Verschieberichtung angeordnete Bohrungen 58, in die die Verriegelungsbolzen 54 bei fluchtender Anordnung durch die Kraft der Federelemente gedrängt werden. In Verriegelungsstellung greifen somit die Verriegelungsbolzen 54 in die Bohrungen 58 des Grundelementes 12 ein. Durch die Anordnung der Bohrungen 58 wird ein Verschiebebereich (Sitzfeld) der Fahrzeugkomponente definiert. Zusätzlich zu den Verriegelungsbolzen 54 ist ein weiterer Verriegelungsbolzen 60 vorgesehen, dem eine Bohrung 62 des Grundkörpers 12 zugeordnet ist. Dieser zusätzliche Verriegelungsbolzen 60 dient der Arretierung des Fahrzeugsitzes in einer sogenannten CARGO-Position. In dieser Position kann eine Rückenlehne des Sitzes zur Ausbildung einer Ladefläche umgeklappt werden, wobei sich die Verriegelungsbolzen 54 außerhalb des Verschiebebereiches (Sitzfeld) befinden.

Figur 2 zeigt eine Schnittdarstellung durch einen Grundkörper 12 in einer abgewandelten Ausführungsvariante. Gleiche Teile wie in Figur 1 sind mit gleichen Bezugszeichen versehen und nicht nochmals erläutert. Aus Gründen der Übersichtlichkeit wurde auf die Darstellung eines Führungselementes 14 verzichtet.

Bei der in Figur 2 gezeigten Ausführungsvariante sind in dem oberen plattenförmigen Element 24 sickenartige Vertiefungen 64 vorgesehen, denen Verstärkungsbereiche 66 des Grundelementes 12 zugeordnet sind. Die sickenartigen Vertiefungen 64 dienen der Aufnahme weiterer Befestigungselemente zum kraftschlüssigen Verbinden des Grundelementes 12 mit dem Fahrzeugboden 16. Diese Befestigungspunkte 68 können rasterartig über die gesamte Fläche des Grundkörpers 12 vorgesehen sein. Durch diese zusätzlichen Befestigungspunkte 68 wird eine Versteifung der Verbindung zwischen Grundelement 12 und Fahrzeugboden 16 erreicht, so dass ein so genanntes Aufschwingen des Grundelementes 12 mit Biegeeigen-Frequenzen während einer Fahrt des Kraftfahrzeuges verhindert wird. Diese zusätzliche Versteifung führt ferner zu der Verhinderung von Vibrationsgeräuschen durch eigenfrequentes Schwingen des Grundelementes 12.

In den Figuren 3 und 4 sind schematische Perspektivansichten des Befestigungssystems 10 gezeigt. Gleiche Teile wie in Figur 1 sind mit gleichen Bezugszeichen versehen und nicht nochmals erläutert.

Anhand der Figuren 3 und 4 wird insbesondere das Zusammenwirken des Grundelementes 12 mit dem Führungselement 14 deutlich. Ferner ist die im Wesentlichen ebene obere Fläche 68 des plattenförmigen Elementes 24 erkennbar. Diese Fläche 68 kann entweder mit einer Riffelung oder dergleichen versehen sein, so dass ein weiteres Aufbringen eines Abdeckelementes nicht notwendig ist. Nach weiteren Ausführungsbeispielen kann jedoch auch ein Teppichboden oder dergleichen angeordnet werden. Diese Abdeckung kann beispielsweise durch Verkleben oder durch Rastverbindungen (Verklipsen) befestigt werden. Dadurch, dass die Fläche 68 im Wesentlichen eben ist, braucht eine besondere Formgebung der Abdeckung nicht berücksichtigt zu werden.

## Patentansprüche

1. Befestigungssystem zur verschiebbaren Befestigung von Fahrzeugkomponenten, insbesondere von Sitzen oder dergleichen, an einem Boden eines Fahrzeuges, insbesondere Kraftfahrzeuges, mit einem im Wesentlichen parallel zum Boden angeordneten Grundkörper, der zur verschiebbaren Aufnahme der Fahrzeugkomponente wenigstens ein Schienenprofil ausbildet, wobei der Grundkörper kraftschlüssig mit dem Boden verbunden ist, **dadurch gekennzeichnet,** dass der Grundkörper (12) zwei im Wesentlichen parallel und beabstandet zueinander angeordnete plattenförmige Elemente (24, 26) umfasst, wobei die plattenförmigen Elemente (24, 26) über Versteifungsstrukturen (28) miteinander kraftschlüssig verbunden sind.

2. Befestigungssystem nach Anspruch 1, **dadurch gekennzeichnet**, dass ein Abstand zwischen den Elementen (24, 26) - zur Ausbildung eines Hohlraumes (30) zwischen Grundkörper (12) und Boden (16) - geringer ist als eine Gesamthöhe des Grundkörpers (12).

3. Befestigungssystem nach einem der vorhergehenden Ansprüche, **dadurch gekennzeichnet,** dass Befestigungspunkte (68) zwischen dem Grundkörper (12) und dem Fahrzeugboden (16) innerhalb der Führungsschienen (20) angeordnet sind.

4. Befestigungssystem nach einem der vorhergehenden Ansprüche, **dadurch gekennzeichnet,** dass die Versteifungsstrukturen (28) von die Elemente (24, 26) verbindenden Stegen (32) gebildet sind.

5. Befestigungssystem nach Anspruch 4, **dadurch gekennzeichnet,** dass die Stege (32) unter einem Winkel (α) zu den Elementen (24, 26) verlaufen.

6. Befestigungssystem nach Anspruch 5, **dadurch gekennzeichnet,** dass der Winkel (α) zwischen 10° und 90°, insbesondere 30°, beträgt.

7. Befestigungssystem nach einem der vorhergehenden Ansprüche, **dadurch gekennzeichnet,** dass die Schienenprofile (20) im Wesentlichen bündig mit dem oberen plattenförmigen Element (24) abschließen.

8. Befestigungssystem nach einem der vorhergehenden Ansprüche, **dadurch gekennzeichnet,** dass der Grundkörper (12) außerhalb der Führungsschienen (20) wenigstens einen weiteren Befestigungspunkt (68) mit dem Fahrzeugboden (16) ausbildet.

9. Befestigungssystem nach Anspruch 8, **dadurch gekennzeichnet,** dass der Befestigungspunkt (68) eine sickenartige Vertiefung (64) zur Aufnahme eines Befestigungsmittels ausbildet.

10. Befestigungssystem nach Anspruch 9, **dadurch gekennzeichnet,** dass im Bereich des Befestigungspunktes (68) das Grundelement (12) eine Verstärkung (66) aufweist.

11. Befestigungssystem nach einem der vorhergehenden Ansprüche, **dadurch gekennzeichnet,** dass die Schienenprofile (20) Aufnahmeöffnungen zum Einbringen eines mit der Fahrzeugkomponente verbundenen Führungselementes (14) umfassen.

12. Befestigungssystem nach einem der vorhergehenden Ansprüche, **dadurch gekennzeichnet,** dass der Grundkörper (12) Aufnahmen (58, 62) für Arretierungselemente (54, 60) der Fahrzeugkomponente aufweist.

13. Befestigungssystem nach einem der vorhergehenden Ansprüche, **dadurch gekennzeichnet,** dass die Führungselemente Stützelemente (44) zur Abstützung der Fahrzeugkomponente quer zu einer Verschieberichtung der Fahrzeugkomponente umfassen.

14. Befestigungssystem nach einem der vorhergehenden Ansprüche, **dadurch gekennzeichnet,** dass die Führungselemente (14) Rollen (42) zur verschiebbaren Lagerung der Fahrzeugkomponente aufweisen.
